Europäisches Patentamt

European Patent Office

Office européen des brevets

(11) Veröffentlichungsnummer : **0 108 296**
**B1**

# EUROPÄISCHE PATENTSCHRIFT

(45) Veröffentlichungstag der Patentschrift :
21.01.87

(51) Int. Cl.⁴ : **H 02 G 15/10**

(21) Anmeldenummer : 83110350.2

(22) Anmeldetag : 17.10.83

(54) **Flammgeschützte Gehäuse für Kabelverbindungen der Nachrichten- und Energieübertragung.**

(30) Priorität : 04.11.82 DE 3240758

(43) Veröffentlichungstag der Anmeldung :
16.05.84 Patentblatt 84/20

(45) Bekanntmachung des Hinweises auf die Patenterteilung : 21.01.87 Patentblatt 87/04

(84) Benannte Vertragsstaaten :
AT BE CH DE FR GB IT LI LU NL SE

(56) Entgegenhaltungen :
DE-A- 2 415 639
DE-A- 2 440 296
DE-A- 2 834 189
GB-A- 1 575 308
US-A- 4 018 962
US-A- 4 158 420
IEEE TRANSACTIONS ON INDUSTRY APPLICATIONS, Band IA-17, Nr. 4, Juli/August 1981, Seiten 376-381, IEEE, New York, US R.H. KING: "Laboratory evaluation of underground coal mine trailing cable splices"
ELEKTROTECHNISCHE ZEITSCHRIFT ETZ-B, Band 23, Nr. 15/16, 6. August 1971, Seite 380, VDE-Verlag, Berlin, DE "Starkstromkabel und -leitungen"

(73) Patentinhaber : Siemens Aktiengesellschaft Berlin und München
Wittelsbacherplatz 2
D-8000 München 2 (DE)

(72) Erfinder : Behmer, Albin, Dr.
Meisenweg 5
D-8620 Lichtenfels (DE)
Erfinder : Mahler, Ernst
Margaretenweg 5
D-8620 Lichtenfels (DE)
Erfinder : Meitsch, Hans-Jürgen
Gudrunstrasse 6
D-8034 Germering (DE)
Erfinder : Rost, Jan
Lindemoosweg 15
D-8131 Traubing (DE)

**Beschreibung**

Die Erfindung betrifft flammgeschützte Gehäuse aus Thermoplast-Formstoffen für Kabelverbindungen der Nachrichten- und Energieübertragung, insbesondere Kabelmuffen und Kabelendverschlüsse.

Aus der GB-A-15 75 308 sind Umhüllungen aus einem Lochblech bzw. Streckmetall, das in einem deutlichen Abstand zum Kunststoffkörper angebracht ist, bekannt. Derartige Anordnungen sind mechanisch steif und nicht elastisch verformbar.

Aus der US-A-40 18 962 ist es bekannt, den zu schützenden Körper mit einer brandschützenden Binden « tape » zu umwickeln. Mit den angegebenen Trägern, Geweben aus Aramid-, Glas- oder Polyesterfasern können keine formstabilen Körper erhalten werden.

Kabelmuffen aus Kunststoff als Gehäuse für Kabelverbindungen für Nachrichtenübertragung sind seit langem bekannt. Kabelmuffen, vorzugsweise aus einem Thermoplast-Formstoff, haben ihre großen Vorteile in der leichten Beund Verarbeitbarkeit, durch ihre Elastizität, ihr geringes Gewicht, ihre Korrosionsfreiheit, ihre geringe Gasdurchlässigkeit, ihre sehr hohe Widerstandsfähigkeit gegen äußere Gewalteinflüsse, wie Schlag- und Fallbeanspruchung, ihren absoluten Berührungsschutz gegen elektrische Spannungen und ihre wirtschaftliche Herstellung. Kabelmuffen aus Thermoplast-Formstoff, vorzugsweise aus einem Polyolefin, sind resistent gegen sehr viele chemische Stoffe.

Aus Thermoplast-Formstoff hergestellte Gehäuse, wie beispielsweise Kabelmuffen, werden jedoch bei äußerer Flammeinwirkung innerhalb kürzester Zeit zerstört. Durch im Muffengehäuse entstandene Durchbrüche können Flammen an die Kabelverbindung (en) gelangen, wodurch die Nachrichtenund Energieübertragung unterbrochen werden kann. Selbst bei flammwidrig ausgerüsteten Thermoplast-Formstoffen kann dieser Vorgang nicht verhindert werden, da die Temperatur in jedem Fall 400 °C übersteigt und damit die Schmelz- und Erweichungstemperatur von Thermoplast-Formstoffen überschritten wird. Dies gilt vor allem für Thermoplast-Formstoffe, die wegen der genannten Eigenschaften für Kabelmuffen eingesetzt sind.

Aufgabe der Erfindung ist die Bereitstellung von Gehäusen aus Thermoplast-Formstoffen für Kabelverbindungen der Nachrichten- und Energieübertragung, insbesondere Kabelmuffen, die bei äußerer Flammeinwirkung eine Zerstörung der Kabelverbindungen verhindern.

Diese Aufgabe wird gemäß der Erfindung gelöst mit einer Thermoplast-Formstoff-Hülle, die eine formstabile, nichtbrennbare, schwerentflammbare Umhüllung aufweist, die gegenüber dem Thermoplast-Formstoff inert ist. Die Umhüllung kleine Durchbrüche aufweisen oder porös sein. Mit einer Umhüllung gemäß der Erfindung ausgerüstete Gehäuse sind beständig gegen äußere Flammeinwirkungen. Vor allem behalten gemäß der Erfindung ausgerüstete Gehäuse ihre äußere Form bei äußerer Flammeinwirkung bei. Diffusionsflammen werden an der Oberfläche der Umhüllung abgeleitet.

Sofern die Ausführung einer Kabelmuffe gemäß der Erfindung einen Dichtungskörper aufweist, kann auch dieser gemäß der Erfindung flammgeschützt ausgeführt sein.

Geeignete Umhüllungen sind z. B. Metallfolien mit einer Stärke von 0,02 bis 0,5 mm. Vorzugsweise wird eine Aluminiumfolie verwendet, die mit einem Haftkleber ausgerüstet ist oder mit einer Polymerbeschichtung versehen ist. Bei letzterem kann die Folie durch Erwärmung auf die Muffe aufgeschweißt sein.

Mit besonderem Vorteil wird für die Umhüllung ein Metalldrahtgewebe oder -geflecht eingesetzt. Die Maschenweite des Gewebes oder Geflechtes liegt dabei vorzugsweise zwischen 0,1 und 5 mm. Das Gewebe oder Geflecht besteht vornehmlich aus einem korrosionsfesten Material, wie z. B. Aluminium, verzinktem oder vernickeltem Stahl oder Kupfer.

Gemäß einer bevorzugten Ausführung der Erfindung kann die Umhüllung aus einem Metalldrahtgewebe oder -geflecht und einem Silikat oder nichtbrennbaren, schwerentflammbaren Kunststoff bestehen. Diese können gegebenenfalls auf einen Träger aufgebracht sein. Geeignet sind härtbare Kunststoffe oder auch eine Beschichtung aus Silikonkunststoff oder Wasserglas. Die Beschichtung kann auch aus einem aufschäumenden Flammschutzmittel bestehen. Gemäß einer weiteren vorteilhaften Ausführungsform der Erfindung ist das Gewebe oder Geflecht beispielsweise eines aus Nirosta® mit einem nichtbrennbaren, schwerentflammbaren Kunststoff beschichtet. Auch hier haben sich Beschichtungen aus härtbaren Kunststoffen, Silikonkunststoff oder aufschäumenden Flammschutzmitteln bewährt.

Ausführungen gemäß der Erfindung, die nach beliebigen Verfahren hergestellt sein können, werden mit Erfolg eingesetzt als Gehäuse für Kabelverbindungen. Sie finden insbesondere Verwendung bei Kabelmuffen und auch für Dichtungskörper, die in Kabelmuffen Anwendung finden können. Es wird in jedem Fall ein hoher Brandschutz bei äußerer Flammeinwirkung erreicht.

Die Erfindung wird anhand der Zeichnung näher erläutert.

Figuren 1 und 2 zeigen Ansichten von Kabelmuffen mit Aufbruch.

Figur 3 zeigt einen Schnitt durch eine Kabelmuffe mit einem Dichtungskörper.

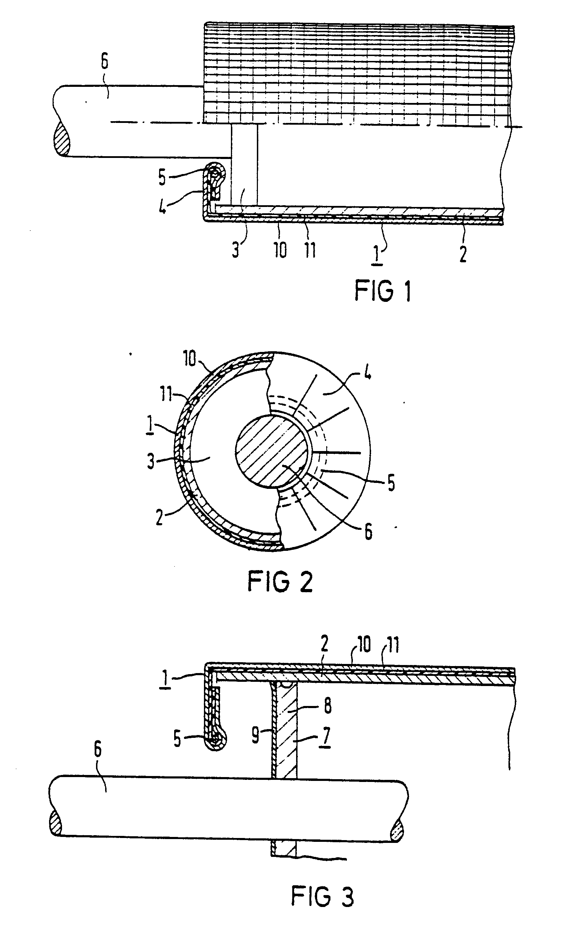

Gemäß den Ausführungen nach den Figuren 1 und 2 ist um eine Thermoplast-Kabelmuffe 2 ein Drahtgeflecht 10 mit einer Beschichtung 11 als Umhüllung 1 gezogen. Um auch den stirnseitigen Bereich, d. h. den Bereich der Kabeleinführung abzudecken, wird die Umhüllung 1 bis auf das Kabel 6 herangezogen. Um dem stirnseitigen Bereich 4 der Umhüllung 1 eine Stabilität zu geben, ist ein Draht 5 eingezogen.

Fig. 3 veranschaulicht eine Kabelmuffe mit einem Dichtungskörper 7, bestehend aus einem Thermoplast-Formstoffkörper 8, der mit einer flammfesten Oberfläche gemäß der Erfindung, der Umhüllung 9 versehen ist.

**Patentansprüche**

1. Flammgeschützte Gehäuse aus Thermoplast-Formstoffen für Kabelverbindungen der Nachrichten- und Energieübertragung, insbesondere Kabelmuffen und Kabelendverschlüsse, dadurch gekennzeichnet, daß eine Thermoplast-Formstoff-Hülle (2) eine formstabile, nichtbrennbare, schwerentflammbare Umhüllung (1) aufweist, die gegenüber dem Thermoplast-Formstoff inert ist.

2. Flammgeschützte Gehäuse nach Anspruch 1, dadurch gekennzeichnet, daß die Umhüllung (1) eine Metallfolie ist.

3. Flammgeschützte Gehäuse nach Anspruch 1, dadurch gekennzeichnet, daß die Umhüllung (1) kleine Durchbrüche aufweist.

4. Flammgeschützte Gehäuse nach Anspruch 3, dadurch gekennzeichnet, daß die Umhüllung (1) ein nichtbrennbares Gewebe oder Geflecht ist.

5. Flammgeschützte Gehäuse nach Anspruch 4, dadurch gekennzeichnet, daß die Umhüllung (1) aus einem Drahtgeflecht oder -gewebe aus Metall besteht.

6. Flammgeschützte Gehäuse nach Anspruch 1, dadurch gekennzeichnet, daß die Umhüllung (1) porös ist.

7. Flammgeschützte Gehäuse nach Anspruch 1, 3, 5 oder 6, dadurch gekennzeichnet, daß die Umhüllung (1) außerdem ein Silikat oder einen nichtbrennbaren, schwerentflammbaren Kunststoff aufweist.

8. Flammgeschützte Gehäuse nach Anspruch 1, 3, 5 oder 6, dadurch gekennzeichnet, daß die Umhüllung (1) außerdem ein aufschäumendes Flammschutzmittel aufweist.

**Claims**

1. A flame-proof housing made from thermoplastic moulding material for cable connections in telecommunication and power transmission, in particular cable sleeves and cable terminals, characterised in that a sleeve (2) of thermoplastic moulding material has a non-combustible, difficultly flammable casing (1) which is stable as regards its shape and is insert relative to the thermoplastic moulding material.

2. A flame-proof housing as claimed in Claim 1, characterised in that the casing (1) is a metal foil.

3. A flame-proof housing as claimed in Claim 1, characterised in that the casing (1) has small openings.

4. A flame-proof housing as claimed in Claim 3, characterised in that the casing (1) is a non-combustible netting or gauze.

5. A flame-proof housing as claimed in Claim 4, characterised in that the casing (1) consists of a wire netting or wire gauze made of metal.

6. A flame-proof housing as claimed in Claim 1, characterised in that the casing (1) is porous.

7. A flame-proof housing as claimed in Claim 1, 3, 5 or 6, characterised in that the casing (1) further has a silicate or a non-combustible, difficultly flammable synthetic resin.

8. A flame-proof housing as claimed in Claim 1, 3, 5 or 6, characterised in that the casing (1) further has a foaming fireproofing agent.

**Revendications**

1. Boîtes protégées contre les flammes, en matières thermoplastiques moulées, pour connexions de câbles de télécommunications et de transport d'énergie, en particulier boîtes de jonction de câbles et boîtes d'extrémités de câbles, caractérisées en ce qu'elles possèdent une enveloppe (2), en matière thermoplastique moulée, qui est pourvue d'un recouvrement (1) de forme stable, non combustible et difficilement inflammable, qui est inerte vis-à-vis de la matière thermoplastique moulée.

2. Boîtes selon la revendication 1, caractérisées en ce que le recouvrement (1) est une feuille métallique.

3. Boîtes selon la revendication 1, caractérisées en ce que le recouvrement (1) présente de petits ajours.

4. Boîtes selon la revendication 3, caractérisées en ce que le recouvrement (1) est un tissu ou un treillis non combustible.

5. Boîtes selon la revendication 4, caractérisées en ce que le recouvrement (1) est un treillis ou un tissu de fil métallique.

6. Boîtes selon la revendication 1, caractérisées en ce que le recouvrement (1) est poreux.

7. Boîtes selon la revendication 1, 3, 5 ou 6, caractérisées en ce que le recouvrement (1) présente, en outre, un silicate ou une matière plastique non combustible et difficilement inflammable.

8. Boîtes selon la revendication 1, 3, 5 ou 6, caractérisées en ce que le recouvrement (1) présente, en outre, un produit moussant de protection contre les flammes.

FIG 1

FIG 2

FIG 3